# EUROPÄISCHE PATENTSCHRIFT

(11) **EP 1 181 561 B1**
(45) Veröffentlichungstag und Bekanntmachung des Hinweises auf die Patenterteilung: **13.12.2006**
(21) Anmeldenummer: 00988642.5
(22) Anmeldetag: 24.11.2000
(51) Int. Cl.: G01P 5/00, G01P 5/20

(54) **VERFAHREN UND VORRICHTUNG ZUR ANALYSE VON STRÖMUNGEN**
METHOD AND DEVICE FOR FLOW ANALYSIS
PROCEDE ET DISPOSITIF POUR ANALYSER DES ECOULEMENTS

(30) Priorität: 28.12.1999 DE 19963393
(43) Veröffentlichungstag der Anmeldung: 27.02.2002
(73) Patentinhaber: ROBERT BOSCH GMBH, 70442 Stuttgart (DE)
(72) Erfinder: ARNDT, Stefan, 70569 Stuttgart (DE); HEINEN, Christian, 70771 Leinfelden-Echterdingen (DE); REYMANN, Klaus, 70839 Gerlingen (DE); RUCK, Bodo, 76228 Karlsruhe (DE)
(86) Internationale Anmeldenummer: PCT/DE2000/004170
(87) Internationale Veröffentlichungsnummer: WO 2001/048489

(56) Entgegenhaltungen:
- DE-A- 19 502 993
- DE-A- 19 737 933
- GOSS L P ET AL: "Two-color particle velocimetry" ICALEO '89: OPTICAL METHODS IN FLOW AND PARTICLE DIAGNOSTICS, ORLANDO, FL, USA, 15-20 OCT. 1989, Bd. 1404, Seiten 99-109, XP000997975 Proceedings of the SPIE - The International Society for Optical Engineering, 1990, USA ISSN: 0277-786X
- GHAMELE Y M ET AL: "A method for validating two-dimensional flow configurations in particle streak velocimetry" TRANSACTIONS OF THE ASME. JOURNAL OF FLUIDS ENGINEERING, JUNE 2000, ASME, USA, Bd. 122, Nr. 2, Seiten 438-440, XP000997966 ISSN: 0098-2202
- POST M E ET AL: "TWO-COLOR PARTICLE-IMAGING VELOCIMETRY USING A SINGLE ARGON-ION LASER" EXPERIMENTS IN FLUIDS,DT,SPRINGER VERLAG. BERLIN, Bd. 16, Nr. 3/04, 1. Februar 1994 (1994-02-01), Seiten 263-272, XP000450979 ISSN: 0723-4864
- BRUECKER C: "DIGITAL-PARTICLE-IMAGE-VELOCIMETRY (DPIV) IN A SCANNING LIGHT-SHEET: 3D STARTING FLOW AROUND A SHORT CYLINDER" EXPERIMENTS IN FLUIDS, Bd. 19, Nr. 4, August 1995 (1995-08), Seiten 255-263, XP000524631 SPRINGER, HEIDELBERG, DE

## Beschreibung

Die Erfindung betrifft ein Verfahren und eine Vorrichtung zur Analyse und Quantifizierung von Strömungen, insbesondere zur dreidimensionalen Bestimmung von Strömungsgeschwindigkeitskomponenten oder der dreidimensionalen Sichtbarmachung von Strömungen in Flüssigkeiten oder Gasen, nach der Gattung der unabhängigen Ansprüche.

### Stand der Technik

Die Messung von Strömungsgeschwindigkeiten und das Sichtbarmachen von Strömungen findet insbesondere in der Aerodynamik und der Fluiddynamik bei der Analyse und Optimierung unterschiedlichster Strömungsphänomene sowie auch im Bereich der Verfahrenstechnik und der Produktionstechnik breite Anwendungen. Dabei werden sowohl mechanische, elektromechanische als auch optische Strömungsmeßverfahren eingesetzt. Die existierenden optischen Strömungsmeßverfahren lassen sich dabei grob einteilen in Punkt-, Flächen- und Raummeßverfahren.

So ist die flächenhafte Erfassung instationärer Strömungsvorgänge oder räumlicher Turbulenzstrukturen bisher mittels sogenannter Ganzfeldverfahren möglich. Diese Verfahren detektieren in Flüssigkeits- oder Gasströmungen das Streulicht darin suspendierter Teilchen in Lichtschnitten beziehungsweise Lichtschnittebenen.

Zudem sind im Fall der Flächenmeßverfahren die sogenannte "Particle Image Velocimetry (PIV)" sowie "Particle Tracking Verfahren" üblich. Dabei wird die Verschiebung suspendierter Teilchengruppen oder einzelner suspendierter Teilchen in einem hinsichtlich der Strömungsverhältnisse zu analysierenden Medium mittels Korrelationsalgorithmen beziehungsweise Trakkingalgorithmen bestimmt.

Weiter ist bei den Flächenmeßverfahren bekannt, zwei unterschiedliche, farbige Lichtschnitte gleichzeitig für die Bestimmung der Normalgeschwindigkeitskomponenten der suspendierten Teilchen senkrecht zu den Lichtschnittebenen einzusetzen. Dazu sei beispielsweise auf I. Kimura und Y. Kohno, "Measurement of three-dimensional velocity vectors in a flow field based on spatio-temporal image correlation", 3. Internationales Symposium FLUCOME, Seite 609 bis 615, (1991), C. Brücker, "3-D PIV via spatial correlation in a color-coded light-sheet", Experiments in Fluids, 21, Seite 312 bis 314, Springer-Verlag, 1996, und A. Cenedese und A. Paglialunga, "A new technique for the determination of the third velocity component with PIV", Experiments in Fluids, 8, Seite 228 bis 230, Springer-Verlag, 1998, verwiesen.

In M. Raffel et al., "Analytical and experimental investigations of dual-plane particle image velocimetry", Opt. Eng. 35, 7, Seite 2067 bis 2074, (1996), wird weiter vorgeschlagen, einen einzelnen Lichtschnitt mit Hilfe einer Chopper-Scheibe in zwei Lichtschnittpositionen räumlich zu versetzen.

Schließlich ist aus F. Dinkelacker et al., "Determination of the third velocity component with PTA using an intensity graded light sheet", Experiments in Fluids 13, Seite 357 bis 359, Springer-Verlag, 1992, bereits bekannt, einzelne dickere Lichtschnitte entlang einer Lichtschnittiefe in ihrer Intensität zu modulieren.

Die genannten flächenhaften Verfahren erlauben zusammenfassend die Bestimmung von Geschwindigkeitskomponenten der suspendierten Teilchen innerhalb einer Ebene und somit auch eine Analyse der Strömungen in der zu untersuchenden Flüssigkeit beziehungsweise dem zu untersuchenden Gas. Sie sind jedoch lediglich in der Lage, dreidimensionale Strömungen in einer Ebene und nicht in einem Volumen zu analysieren.

Unter den Raummeßverfahren, das heißt denjenigen Meßverfahren, die die Analyse von Strömungen in einem Volumen ermöglichen, sind die stereoskopischen Verfahren zu nennen, die beispielsweise aus R. Racca und J. Dewey, "A method for automatic particle tracking in a three-dimensional flow field", Experiments in Fluids 6, Seite 25 bis 32, Springer-Verlag, 1988, bekannt sind., oder die, wie von T. Chang et al., "Application of image processing to the analysis of three-dimensional flow fields", Opt. Eng., 23, 3, Seite 282 bis 287, (1984), vorgeschlagen, mit stereoskopischen Linsen arbeiten. Bei diesem Verfahren erfolgt die Aufzeichnung des Strömungsfeldes durch Einsatz von zwei bis vier Kameras aus unterschiedlichen Richtungen.

Allen vorgenannten Raummeßverfahren ist gemein, daß bei ihnen eine kontinuierliche Ausleuchtung des zu analysierenden Strömungsfeldes stattfindet und/oder daß das zu analysierende Volumen mit mehreren Bilddetektoren aus unterschiedlichen Richtungen aufgenommen wird. Daher sind diese Verfahren für die Praxis, wo Rüstzeiten, optische Zugänglichkeit und Beschränkungen hinsichtlich der Beobachtungsrichtung eine wichtige Rolle spielen, nur bedingt einsetzbar. Letzteres qilt im übrigen auch für die holographischen Verfahren.

Die Schrift DE19737933A sowie die Schrift GBAMELE Y M ET AL: "A method for validating two-dimensional flow configurations in particle streak velocimetry" TRANSACTIONS OF THE ASME. JOURNAL OF FLUIDS ENGINEERING, JUNE 2000, ASME, USA, Bd. 122, Nr. 2, Seiten 438-440, XP000997966 beschreiben jeweils Messverfahren, bei denen im Detektionsraum mehrere parallele hintereinander angeordnete Lichtebenen unterschiedlicher Farbe erzeugt werden. Mittels Videokameras, deren optische Achsen jeweils in Normalenrichtung zu den Lichtebenen ausgerichtet sind, wird das jeweilige Strömungsfeld im gesamten Detektionsraum in allen Farben gleichzeitig erfasst.

Aus C. Brücker, "Digital-Particle-Image-Velocimetry (DPIV) in a scanning light sheet: 3-D starting flow around a short cylinder", Experiments in Fluids 19, Seite 255 bis 263, Springer-Verlag, (1995), ist schließlich ein Raummeßverfahren bekannt, bei dem das zu analysierende Volumen mit Hilfe eines Trommelscanners mit einem einfarbigen Laserstrahl abgetastet wird. Die Aufnahme des an den suspendierten Teilchen gestreuten, die Strömung charakterisierenden Streulichtes als Funktion der Zeit erfolgt dabei mittels einer Hochgeschwindigkeitskamera. Dazu wird jede einzelne Lichtebenenposition in dem zu analysierenden Volumen separat aufgezeichnet, so daß die Aufzeichnung des Strömungsfeldes an die Bildwiederholfrequenz der verwendeten Kamera gebunden ist. Zudem erzeugt die separate Aufzeichnung jeder einzelnen Lichtebenenposition in dem Detektionsraum eine sehr große Datenmenge mit entsprechend hohem Speicherbedarf.

Die Aufgabe der vorliegenden Erfindung ist es, die Messung von Strömungsgeschwindigkeiten und die Analyse von Strömungen in Gasen und Flüssigkeiten innerhalb eines Detektionsraumes dreidimensional und gleichzeitig einfacher, schneller und kostengünstiger durchzuführen.

### Vorteile der Erfindung

Das erfindungsgemäße Verfahren und die erfindungsgemäße Vorrichtung mit den kennzeichnenden Merkmalen der unabhängigen Ansprüche hat gegenüber dem Stand der Technik den Vorteil eines relativ geringen apparativen Aufwandes, insbesondere hinsichtlich der Detektionseinrichtung. Weiter ist vorteilhaft, daß lediglich eine Beobachtungsrichtung beziehungsweise lediglich eine CCD-Farbkamera erforderlich ist.

Daneben hat das erfindungsgemäße Verfahren den Vorteil, daß die anfallenden Datenmengen relativ gering sind, und sie sich damit leicht und übersichtlich bearbeiten und auswerten lasssen.

Schließlich ist die erreichbare Auflösung beziehungsweise Meßgenauigkeit bei dem erfindungsgemäßen Verfahren nun nicht mehr beispielsweise an die Bildwiederholfrequenz einer Hochgeschwindigkeitskamera gebunden, sondern wird lediglich durch den Abstand und die zeitliche Differenz in der Erzeugung von zwei zueinander benachbarten, parallelen, räumlich hintereinander angeordneten Lichtebenen begrenzt.

Vorteilhafte Weiterbildungen der Erfindung ergeben sich aus den in den abhängigen Ansprüchen genannten Maßnahmen.

So ist es besonders vorteilhaft, wenn eine Vielzahl von Lichtebenen mit Licht unterschiedlicher Farbe oder unterschiedlichem Frequenzspektrum eingesetzt werden, wobei diese Farben sowohl im sichtbaren Frequenzbereich als auch im nahen Ultraviolett oder nahen Infrarot liegen können. In diesem Fall eignet sich zur Aufzeichnung des innerhalb des Detektionsraumes von dem die Strömung charakterisierenden Teilchen ausgehenden oder gestreuten Lichtes eine herkömmliche und damit relativ preiswerte CCD-Farbkamera.

Als elektromagnetische Wellen bzw. Licht eignet sich einerseits ein mehrfarbiger Lichtstrahl, wobei unter mehrfarbig hier ein Lichtstrahl verstanden werden soll, der ein breiteres Frequenzspektrum im sichtbaren Frequenzbereich abdeckt und beispielsweise für das menschliche Auge weiß oder als Mischfarbe erscheint, sowie andererseits gegebenenfalls auch mehrere derartige Lichtstrahlen, die jeweils eine oder mehrere unterschiedliche Farben bzw. Grundfarben zur Verfügung stellen.

Die Lichtquelle für diesen oder diese Lichtstrahlen kann dabei ein oder mehrere Laser oder auch eine Anordnung von Laserdioden, die bei Bedarf jeweils unterschiedliche Farben Misch- oder Grundfarben (Rot/Gelb/Blau) erzeugen, sein. Daneben kommem auch Projektionslapmen mit punktförmiger Lichtfläche in Frage.

Besonders vorteilhaft sind ein oder mehrere mehrfarbige Laserstrahlen, da auf diese Weise eine besonders gute Kollimation und räumliche Auflösung beziehungsweise Trennung der einzelnen Lichtebenen in dem Detektionsraum erreicht wird.

Um sicherzustellen, daß bei dem Abrastern des Detektionsraumes durch die parallelen Lichtebenen am Ort der Bilddetektoren beziehungsweise der Detektionseinrichtung stets eine zumindest weitgehend gleichbleibende, gute Tiefenschärfe gewährleistet ist, ist es vorteilhaft, wenn die Detektionseinrichtung oder die eingesetzte CCD-Farbkamera mit einer zusätzlichen Einrichtung zur kontinuierlichen oder schrittweisen Einstellung der Tiefenschärfe versehen ist. Dabei wird die Einstellung der Tiefenschärfe beispielsweise durch eine Steuereinheit mit dem Abrastern des Detektionsraumes durch die zeitlich nacheinander erzeugten Lichtebenen korreliert.

Zur Auswertung der von der CCD-Farbkamera beziehungsweise der Detektionseinrichtung aufgenommenen Bilder des Detektionsraumes eignen sich prinzipiell bekannte Algorithmen und Auswerteverfahren aus der "Particle Image Velocimerty", die die zusätzlich auch die Farbinformation berücksichtigen. Daneben können jedoch auch "Particle Tracking-Verfahren" eingesetzt werden.

Insgesamt ist es bei den genannten, dem Fachmann bekannten Verfahren lediglich erforderlich, diese hinsichtlich der Farberkennung bzw. Frequenz- oder Frequenzbanderkennung sowie der Auswertung der Frequenz- bzw. Farbinformation zur Quantifizierung der Normalgeschwindigkeitskomponenten zu erweitern.

Eine einfache und schnelle Filterung des von der Lichtquelle bereitgestellten mehrfarbigen Lichtes erfolgt vorteilhaft mittels eines an sich bekannten akustooptischen Modulators, mit dem eine Farbmischung beziehungsweise die Erzeugung beliebiger Farben mit einer Farbwechselfrequenz, die bis in den MHz-Bereich hineinreicht, möglich ist.

Daneben ist in der Beleuchtungseinrichtung vorteilhaft ein Kollimator und ein Polygonscanner mit anschließendem Galvanometer-Scanner vorgesehen, die es erlauben, den Detektionsraum mit hoher räumlicher Auflösung, das heißt geringer Breite und klarer räumlicher Trennung der einzelnen, benachbarten Lichtebenen, abzurastern.

### Zeichnungen

Die Erfindung wird anhand der Zeichnungen und in der nachfolgenden Beschreibung näher erläutert.

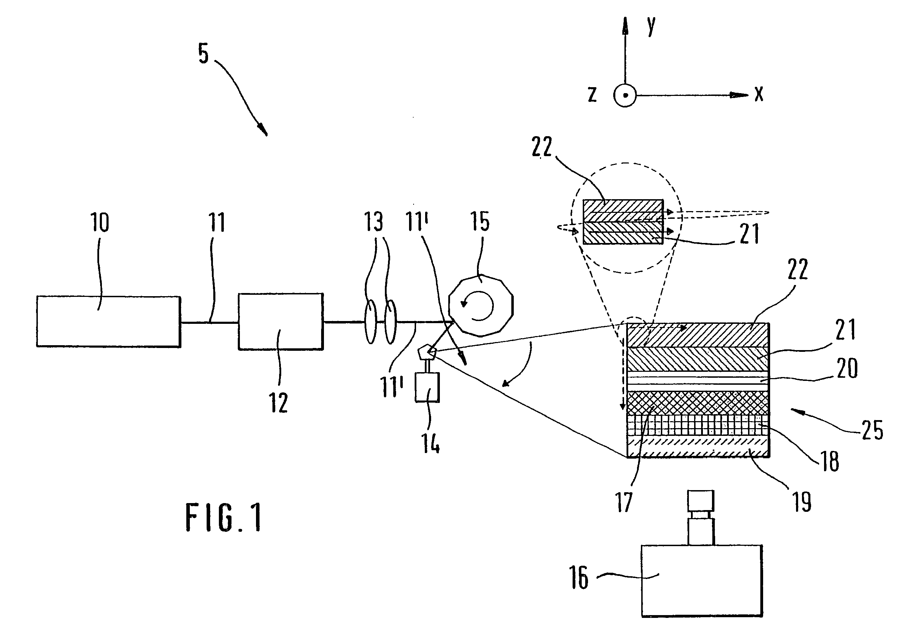

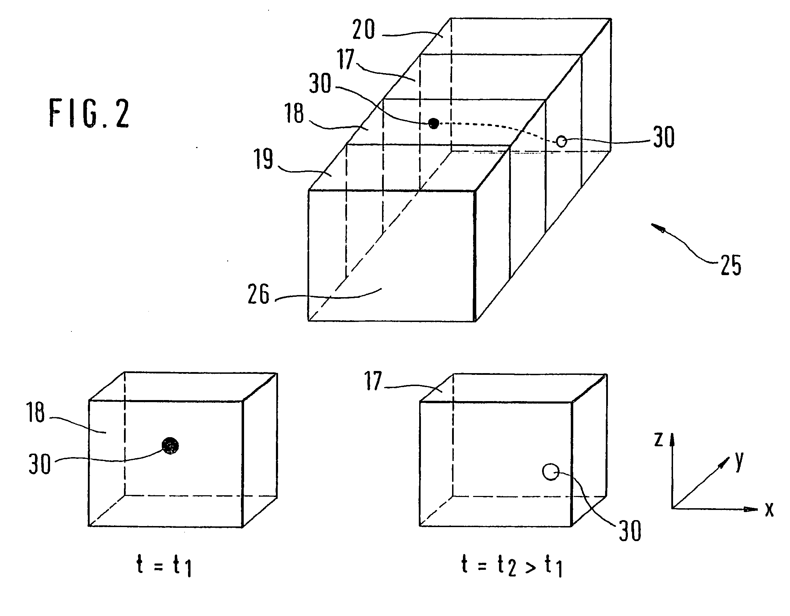

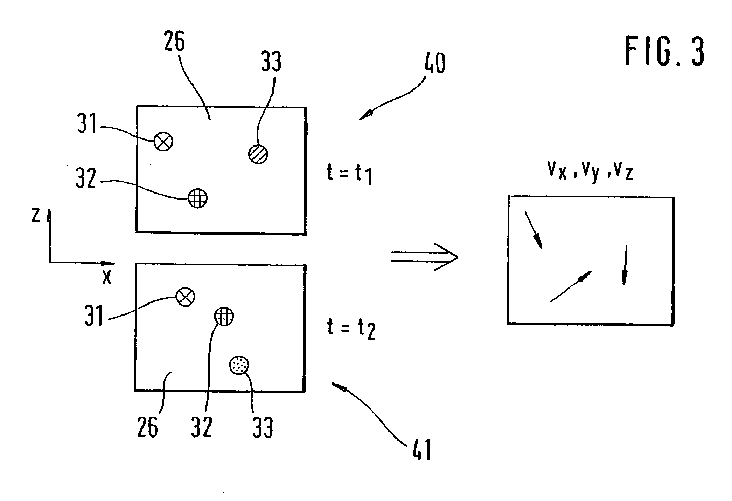

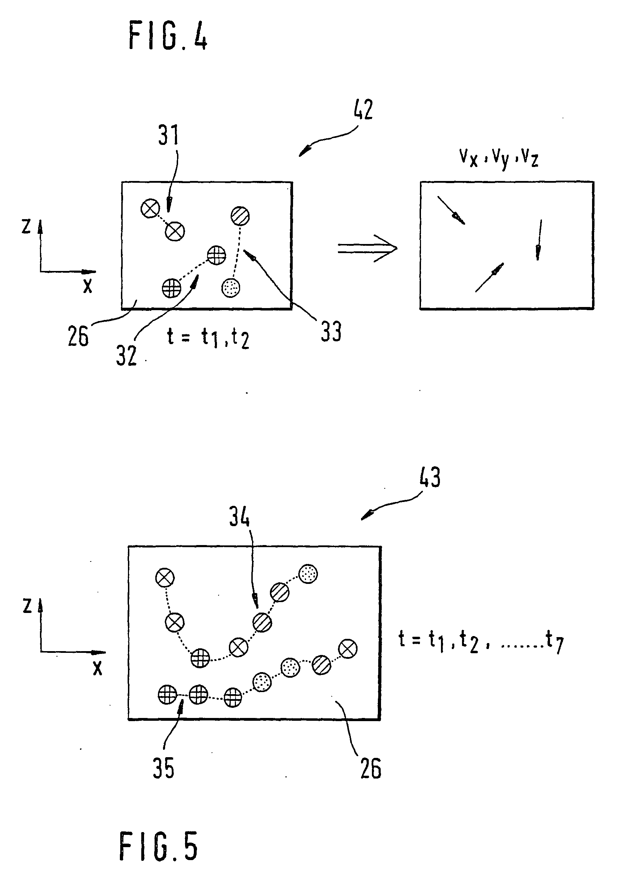

Es zeigen Figur 1 zeigt eine Prinzipskizze einer erfindungsgemäßen Strömungsanalysevorrichtung in Draufsicht, Figur 2 eine dreidimensionale Darstellung eines Ausschnittes des Detektionsraumes mit zusätzlich zwei Ausschnitten zweier separater Lichtebenen zu zwei unterschiedlichen Zeitpunkten, Figur 3 zwei nacheinander an der Stirnseite des Detektionsraumes aufgenommene Bilder zur Berechnung der Strömungsgeschwindigkeitskomponenten der einzelnen Teilchen, Figur 4 ein einzelnes Bild des Detektionsraumes mit zwei zu verschiedenen Zeiten gemachten Aufnahmen und Figur 5 in Weiterführung des in Figur 4 dargestellten Detektionsraumes mit einer Vielzahl aufeinanderfolgender Abtastvorgänge.

### Ausführungsbeispiele

Kern des erfindungsgemäßen Verfahrens ist, daß mittels einer Beleuchtungseinrichtung, beispielsweise einer Lichtquelle zur Emission von elektromagnetischen Wellen in Form von mehrfarbigem Licht, und nachgeschalteten optischen Komponenten, verschiedenfarbige oder in ihrer Frequenz oder ihrem Frequenzspektrum unterschiedliche, zumindest näherungsweise parallele Lichtebenen erzeugt werden, die räumlich und zeitlich hintereinander angeordnet, einen Detektionsraum 25 oder einen Bereich des Detektionsraumes 25 abtasten beziehungsweise abrastern, und daß während dieses Abtastvorganges ein oder mehrere Bilddetektoren beziehungsweise Detektionseinrichtungen, beispielsweise eine an einer Stirnseite 26 des Detektionsraumes 25 angeordnete CCD-Farbkamera 16, ein Abbild des Detekionsraumes 25 aufzeichnen.

Als Lichtquelle 10 wird dazu im erläuterten Beispiel eine mehrfarbige Lichtquelle, beispielsweise ein mehrfarbiger Laserstrahl eingesetzt, der entweder im Pulsbetrieb oder im Dauerstrichbetrieb arbeitet.

Alternativ läßt sich der mehrfarbige Lichtstrahl jedoch auch mit unterschiedlich farbigen Laserdioden oder mehreren Lasern unterschiedlicher Frequenz realisieren, die dann mit Hilfe optischer Komponenten überlagert werden.

Eine weitere Möglichkeit zur Erzeugung eines mehrfarbigen Lichtstrahles, insbesondere eines mehrfarbigen Laserstrahles 11, besteht im Einsatz von Faserlasern.

Zur Erzielung einer räumlich und zeitlich hintereinander angeordneten Staffelung von parallelen Lichtebenen im Bereich des Detektionsraumes 25 sind im Anschluß an die Lichtquelle 10 weitere Bauteile vorgesehen. So erfolgt der Farbwechsel von einer Lichtebene zu der nächsten beispielsweise mit Hilfe eines akustooptischen Modulators 12 oder alternativ mittels integriert-optischer Farbmischer.

Die Erzeugung der unterschiedlichen, benachbarten, parallelen Lichtebenen erfolgt dann durch einen im Anschluß an den akustooptischen Modulator 12 vorgesehen Kollimator 13, einen nachfolgenden, an sich bekannten Galvanometer-Scanner 14 und einen nachfolgenden, an sich bekannten Polygon-Scanner 15.

Diese im Anschluß an den akustooptischen Modulator 12 vorgesehenen Bauteile bewirken ein Abrastern des Detektionsraumes 25 durch den den akustooptischen Modulator 12 verlassenden, einfarbigen Laserstrahl 11' in Form von zumindest näherungsweise parallelen, räumlich hintereinander und zeitlich nacheinander erzeugten Lichtebenen 17, 18, 19, 20, 21, 22. Unter dem Begriff "einfarbig" wird dabei lediglich verstanden, daß der Laserstrahl 11' gegenüber dem Laserstrahl 11 ein reduziertes Frequenzspektrum und insbesondere eine andere Farbe aufweist, als der einfallende Laserstrahl 11. So kann der Laserstrahl 11 beispielsweise weiß sein, während der Laserstrahl 11' beispielsweise rot, blau oder grün ist. Natürlich kann der Laserstrahl 11 aber auch grün sein, während der Laserstrahl 11' dann beispielsweise blau oder gelb ist.

Die Lichtebenen 17, 18, 19, 20, 21, 22 unterscheiden sich somit jeweils durch ihre Farbe in Folge des von dem akustooptischen Modulators 12 bewirkten Farbwechsels des diesem beispielsweise zugeführten mehrfarbigen oder weißen Laserstrahls 11.

Bevorzugt erfolgt das Abrastern des Detektionsraumes 25 dabei derart, daß die CCD-Farbkamera 16 eine zumindest näherungsweise kontinuierliche Ausleuchtung des Detektionsraumes 25 bzw. der Lichtebenen 17, 18, 19, 20, 21, 22 wahrnimmt.

Die Aufzeichnung des Abbildes des Strömungsraumes kann im übrigen alternativ zu dem Bilddetektor beziehungsweise zu der CCD-Farbkamera 16 auch mittels einer mit Interferenzfiltern versehenen 3-Chip-Spezialkamera, beispielsweise einer sogenannten LLT3-Kamera erfolgen. Im Fall des Einsatzes dieser Spezialkamera werden im einzelnen drei Schwarzweiß-Sensoren eingesetzt, die die Farben rot, grün und blau eines RGB-Bildes repräsentieren. In diesem Fall werden die jeweiligen Farben dann in einem Computer durch Überlagerung der einzelnen Bilder rekonstruiert und in Falschfarben dargestellt.

Diese Vorgehensweise eignet sich insbesondere, wenn lediglich Lichtquellen zur Verfügung stehen, die nur ein geringes Wellenlängenspektrum abdecken, um somit dennoch ein größeres Farbspektrum realisieren zu können.

Da sich bei dem Abrastern des Detektionsraumes durch die parallelen Lichtebenen 17, 18, 19, 20, 21, 22 der Abstand der Lichtebenen der Detektionseinrichtung, insbesondere der CCD-Farbkamera 16, ständig verändert, ist zur Gewährleistung einer zumindest näherungsweise gleichbleibenden Tiefenschärfe in bevorzugter Ausgestaltung der Erfindung im übrigen vorgesehen, der Detektionseinrichtung eine Einrichtung zur kontinuierlichen oder schrittweisen Einstellung der Tiefenschärfe zuzuordnen und diese, beispielsweise über eine an sich bekannte Steuereinheit, mit der sich zeitlich verändernden Positionen der Lichtebenen 17, 18, 19, 20, 21, 22 in dem Detektionsraum 25 zu korrelieren.

Die Auswertung der von der Detektionseinrichtung frequenz- oder frequenzbandselektiv aufgenommenen, zweidimensionalen, farbigen Bilder des Detektionsraumes 25 erfolgt dann entweder anhand einer einzigen Bildaufnahme, auf der zwei oder mehrere Abtastvorgänge aufgezeichnet sind, oder anhand mehrerer, vorzugsweise kurzzeitig nacheinander aufgenommener Bildaufnahmen, auf der jeweils ein oder mehrere Abtastvorgänge aufgezeichnet sind.

Zur Auswertung der Verschiebung der in dem Detektionsraum 25 beziehungsweise der darin enthaltenen Flüssigkeit oder dem darin enthaltenen Gas suspendierten Teilchen und somit die Bestimmung der Geschwindigkeitskomponenten vₓ, v_{y}, v_{z}, die unmittelbar ein Abbild der in dem Detektionsraum 25 herrschenden, lokalen Strömungsverhältnisse darstellen, werden im erläuterten Beispiel im übrigen die bekannten, um die Auswertung der Farbinformtion erweiterten Methoden der "Particle Image Velocimetry" oder bekannter "Particle Tracking-Verfahren" eingesetzt.

Auf diese Weise können die Positionen der suspendierten Teilchen 30, 31, 32, 33, 34, 35 innerhalb der jeweiligen Lichtebenen 17, 18, 19, 20, 21, 22 völlig analog zu herkömmlichen Lichtschnittverfahren ermittelt werden.

Die Positionen dieser Teilchen 30, 31, 32, 33, 34, 35 in Normalen-Richtung (y-Richtung) zu den Lichtebenen 17, 18, 19, 20, 21, 22 ergeben sich dann weiter eindeutig aus der Bestimmung der Farbe des jeweiligen Streulichtes, da jede Farbe dem das Licht emittierenden oder streuenden Teilchen 30, 31, 32, 33, 34, 35 eindeutig eine Lichtebene 17, 18, 19, 20, 21, 22 und damit eine entsprechende Position in y-Richtung zuordnet. Die Meßungenauigkeit in Normalenrichtung ist dabei zunächst durch die Breite der jeweiligen Lichtebene 17, 18, 19, 20, 21, 22 gegeben, kann jedoch durch eine optionale Analyse der Intensitätsverteilung der Streulichtsignale zweier benachbarter Lichtschnittebenen 17, 18, 19, 20, 21, 22 als Funktion der γ-Richtung (Normalen-Richtung) noch gesteigert werden.

Eine vorteilhafte Ausgestaltung der Erfindung sieht im übrigen zur Erreichung eines höheren zeitlichen Auflösungsvermögens vor, daß zwei Lichtebenen sehr schnell hintereinander angeordnet den selben Detektionsraum 25 abtasten. Eine derartige Vorgehensweise läßt sich beispielsweise dadurch realisieren, daß eine entsprechende zweite Beleuchtungseinrichtung vorgesehen ist, oder indem neben einem beispielsweise einfarbigen einfallenden Laserstrahl 11' ein zweiter, unterschiedlich gefärbter, einfallender Laserstrahl bereitgestellt wird, dem entsprechende optische beziehungsweise akustooptische Bauteile nachgeschaltet sind, so daß der zweite Laserstrahl gegenüber dem ersten Laserstrahl 11' mit einem räumlichen Versatz generiert wird, und die beiden Laserstrahlen räumlich und zeitlich einen Versatz von Lichtebenen derart bewirken, daß zwei abwechselnd generierte Lichtebenen dicht hintereinander den selben Detektionsraum 25 abtasten.

Das Ausführungsbeispiel der vorstehend erläuterten Erfindung wird weiter anhand der Figur 1 näher ausgeführt. Die Figur 1 zeigt eine Strömungsanalysevorrichtung 5 mit einer Lichtquelle 10 in Form eines mehrfarbigen Lasers, der einen mehrfarbigen Laserstrahl 11 generiert. Dieser mehrfarbige Laserstrahl 11 wird dem akustooptischen Modulator 12 zugeführt, der in an sich bekannter Weise aus dem zugeführten mehrfarbigen Licht definierte Frequenzen oder Frequenzbereiche ausfiltert und somit einen einfarbigen Laserstrahl 11' emittiert. Im einzelnen bewirkt der akustooptische Modulator 12 dazu entweder eine Farbmischung oder eine Filterung des zugeführten Lichtes. Der von dem akustooptischen Modulator 12 emittierte einfarbige Laserstrahl 11' wechselt somit in sehr schneller Folge seine Farbe. Bekannte akustooptische Modulatoren erlauben es beispielsweise diesen Farbwechsel im Frequenzbereich von 100 kHz bis zu 1 MHz vorzunehmen.

Ein derartiger mehrfarbiger Laserstrahl 11 ist beispielsweise ein Laserstrahl, dessen Farbe sich aus mehreren Grundfarben zusammensetzt.

Bevorzugt werden die Farben rot, grün und blau eingesetzt, die beispielsweise von einem Argon-Krypton-Laser erzeugt werden, der den mehrfarbigen Laserstrahl 11 emittiert. Der akustooptische Modulator 12 nimmt dann eine Modulation der Intensitäten der einzelnen zugeführten Farben in dem mehrfarbigen Laserstrahl 11 derart vor, daß ein hochfrequenter Farbwechsel eintritt und jeweils ein einfarbiger Laserstrahl 11' emittiert wird.

Im Anschluß an den akustooptischen Modulator 12 ist dann der Kollimator 13 vorgesehen, der beispielsweise als Linsensystem ausgestaltet ist und über den die Dicke der einzelnen Lichtebenen 17, 18, 19, 20, 21, 22 einstellbar ist. Bevorzugt liegt die Dicke der einzelnen Lichtebenen im Bereich von 100 µm bis 1 mm, insbesondere 500 µm bis 1 mm.

Die Anzahl der hintereinander angeordneten Lichtebenen 17, 18, 19, 20, 21, 22 beträgt mindestens drei, in der Regel sind jedoch eine Vielzahl von beispielsweise 100 bis 200 Lichtebenen vorgesehen. Der Detektionsraum 25 weist beispielsweise Dimensionen von 10 cm x 10 cm x 10 cm auf.

Der im Anschluß an den Kollimator 13 vorgesehene Polygonscanner 15 gewährleistet die Generierung der einzelnen Lichtebenen 17, 18, 19, 20, 21, 22 aus den zeitlich nacheinander zugeführten einfarbigen Laserstrahlen 11'. Anstelle des Polygonscanners 15 ist alternativ auch der Einsatz einer oder mehrerer, an sich bekannter Zylinderlinsen möglich. Der Polygonscanner 15 rotiert dazu bevorzugt mit 20.000 bis 60.000, insbesondere 40.000, Umdrehungen/Min. Die Scangeschwindigkeit wird im übrigen zweckmäßig an die Meßaufgabe angepaßt, und kann prinzipiell, gegebenefalls unter Einsatz optischer Komponenten, bis in den MHz-Bereich gesteigert werden.

Insgesamt wird somit der einfarbige, in seiner Farbe hochfrequent modulierte Laserstrahl 11' so schnell in einer Ebene geführt, daß die.als Bilddetektor vorgesehene CCD-Farbkamera 16 eine kontinuierliche Ausleuchtung der einzelnen Ebenen wahrnimmt.

Der im Anschluß an den Polygonscanner 15 weiter vorgesehene Galvanometer-Scanner 14 dient dem Versatz der verschiedenfarbigen, parallelen Lichtebenen, so daß diese zumindest näherungsweise parallel, räumlich hintereinander angeordnet den Detektionsraum 25 abtasten, wobei gleichzeitig die Farben dieser hintereinander angeordneten, parallelen Lichtebenen 17, 18, 19, 20, 21, 22 unterschiedlich sind.

In diesem Zusammenhang ist es wichtig, daß der Versatz der Lichtebenen 17, 18, 19, 20, 21, 22 synchron mit dem Farbwechsel des akustooptischen Modulators 12 erfolgt, so daß ein Volumen zumindest näherungsweise parallel zueinander liegender, unterschiedlich farbiger Lichtebenen 17, 18, 19, 20, 21, 22 entsteht. Dazu sind entsprechende, nicht dargestellte, an sich bekannte Steuerbauteile vorgesehen.

Zur Aufzeichnung des Abbildes des Detektionsraumes 25 ist an der Stirnseite 26 des Detektionsraumes 25 die CCD-Farbkamera installiert.

Die Figur 2 erläutert noch einmal die Ausleuchtung eines Ausschnittes des Detektionsraumes 25 mit Hilfe unterschiedlicher Lichtebenen. Im einzelnen sind in Figur 2 vier benachbarte Lichtebenen 17, 18, 19, 20 dargestellt, die räumlich gegeneinander versetzt und zeitlich nacheinander mit Licht unterschiedlicher Farbe beleuchtet werden. Weiter ist exemplarisch ein einzelnes Streuteilchen 30 vorgesehen, das sich zwischen zwei Zeitpunkten t₁ und t₂ von einer ersten Position in der Lichtebene 18 in eine zweite Position in der Lichtebene 17 bewegt. Dies ist in Figur 2 noch einmal separat herausgezeichnet dargestellt.

Die x- und z-Koordinaten der Position des Streuteilchens 30 in dem Detektionsraum 25 ergeben sich unmittelbar aus dem Bild der CCD-Farbkamera 16. Aus der unterschiedlichen Farbe des Streuteilchens 30, hervorgerufen durch dessen Position in zwei unterschiedlichen Lichtebenen 18 beziehungsweise 17 zu den Zeiten t₁ beziehungsweise t₂ läßt sich weiter dann zunächst einerseits die Position des Teilchens 30 in y-Richtung zu den Zeiten t₁ und t₂ bestimmen und andererseits ergibt sich aus der Kenntnis der Zeitdifferenz Δt zwischen t₂ und t₁ neben den Strömungsgeschwindigkeiten des Streuteilchens 30 in x- und z-Richtung auch die Strömungsgeschwindigkeitskomponente in y-Richtung.

Die Figur 3 erläutert dies schematisch am Beispiel zweier nacheinander zu den Zeitpunkten t₁ und t₂ an der Stirnseite 26 des Detektionsraumes 25 von der CCD-Farbkamera 16 aufgenommenen Bildern. Die in dem Detektionsraum 25 suspendierten Streuteilchen 31, 32, 33 rufen dabei eine Streuung des eingestrahlten Lichtes hervor, wobei die unterschiedlichen Symbole für die Streuteilchen 31, 32, 33 in Figur 3 für unterschiedliche Farben dieser Streuteilchen 31, 32, 33 stehen.

Im einzelnen stehen die beiden Bilder zu den Zeitpunkten t₁ und t₂ in Figur 3 für zwei vollständige Abtastvorgänge des Detektionsraumes 25, das heißt sämtliche parallelen, unterschiedlich farbigen Lichtebenen wurden genau zweimal generiert und zwei Bildaufnahmen des Detektionsraumes 25 aufgenommen. In jeder Bildaufnahme ist somit ein vollständiger Abtastvorgang aufgezeichnet.

Aus der Kenntnis der Zeitdifferenz Δt = t₂ - t₁ sowie den Änderungen der Positionen der Streuteilchen 31, 32, 33 in x- und z-Richtung ergeben sich sofort deren Geschwindigkeitskomponenten in x- und z-Richtung. Die Geschwindigkeitskomponente in γ-Richtung der einzelnen Streuteilchen v_{y} = Δy/Δt ergibt sich dann durch Auswertung der Farben, beziehungsweise der Farbänderung der Streuteilchen 31, 32, 33 zwischen den Zeiten t₁ und t₂.

Die Genauigkeit der Bestimmung der Geschwindigkeitskomponente v_{y} ist dabei von der Dicke der einzelnen Lichtebenen abhängig.

Die Figur 4 zeigt eine typische Bildaufnahme bei der zwei vollständige Abtastvorgänge in einer Bildaufnahme der CCD-Farbkamera 16 aufgezeichnet worden sind. Diese beiden Aufnahmen erfolgten kurz nacheinander zu den Zeitpunkten t₁ und t₂. Typische Wiederholraten der Abtastvorgänge des Detektionsraumes 25 liegen dabei im Bereich von 100 Hz bis 1 kHz entsprechend den üblicherweise in Flüssigkeiten zu beobachtenden Strömungsgeschwindigkeiten in der Größenordnung von m/sec. Auch hier sind mit dem erläuterten Verfahren jedoch auch Abtastraten im MHz-Bereich prinzipiell möglich.

Die Größe der Streuteilchen 30, 31, 32, 33, 34, 35 liegt im übrigen typischerweise in der Größenordnung von 1 µm bis 20 µm.

Auch in Figur 4 stehen unterschiedliche Symbole für die Streuteilchen 31, 32, 33 wie in Figur 3 für unterschiedliche Farben dieser Teilchen. Gleiche Symbole bedeuten dabei insbesondere, daß das jeweilige Streuteilchen sich zu den Zeiten t₁ und t₂ in der gleichen Lichtebene befindet.

Im übrigen sei darauf hingewiesen, daß die Figuren 3 bis 5 lediglich zur Illustration dienen und stark vereinfachte Prinzipskizzen sind.

Die Figur 5 zeigt in Weiterführung von Figur 4 eine Bildaufnahme, bei der insgesamt sieben vollständige Abtastvorgänge zu den Zeitpunkten t₁ bis t₇ aufgezeichnet worden sind. Somit wurde in Figur 5 jedes der beiden dargestellten Streuteilchen 34 beziehungsweise 35 von insgesamt 7 Abtastvorgängen erfaßt, so daß sich für jedes Streuteilchen 34, 35 eine Reihe von aufeinanderfolgenden Bildpunkten ergibt. Innerhalb dieser Reihe von Bildpunkten charakterisiert dann wieder die Farbe der Teilchen deren Lage im Detektionsraum in y-Richtung.

Im übrigen sei angemerkt, daß sich die Aufnahmen gemäß Figur 3 mittels in der erläuterten Weise modifizierten Kreuzkorrelationsmethoden, wie sie in der "Particle Image Velocimetry" eingesetzt werden, auswerten lassen.

Die Aufnahmen gemäß Figur 4 und 5 lassen sich entweder ebenfalls mit Hilfe von modifizierten Korrelationsalgorithmen, insbesondere der Autokorrelation, beziehungsweise "Particle Tracking-Verfahren" auswerten.

Schließlich sei betont, daß die Auswertung im Fall von Figur 5 auch ohne Auswertealgorithmus bereits durch qualitative räumliche Beurteilung des Strömungsfeldes erfolgen kann, indem die Bahnen der einzelnen Streuteilchen und die Farbänderung entlang dieser Bahnen berücksichtigt werden.

## Patentansprüche

1. Verfahren zur Analyse von Strömungen, insbesondere zur dreidimensionalen Bestimmung von Strömungsgeschwindigkeitskomponenten oder der dreidimensionalen Sichtbarmachung von Strömungen in Flüssigkeiten oder Gasen, in einem Detektionsraum (25), wobei elektromagnetische Wellen, die zumindest teilweise von in dem Detektionsraum (25) enthaltenen, die Strömung charakterisierenden Teilchen (30, 31, 32, 33, 34, 35) ausgehen oder gestreut werden, detektiert werden, **dadurch gekennzeichnet, daß** zeitlich nacheinander mindestens zwei zumindest näherungsweise parallele, räumlich hintereinander angeordnete Lichtebenen (19, 18, 17, 20, 21, 22) mit elektromagnetischen Wellen unterschiedlicher Frequenz oder unterschiedlichem Frequenzspektrum erzeugt werden, mit denen der Detektionsraum (25) zumindest bereichsweise abgetastet wird.

2. Verfahren nach Anspruch 1, **dadurch gekennzeichnet, daß** Lichtebenen (19, 18, 17, 20, 21, 22) mit elektromagnetischen Wellen in Form von Licht, insbesondere von Licht im sichtbaren Frequenzbereich mit unterschiedlicher Farbe, eingesetzt werden.

3. Verfahren nach Anspruch 1 oder 2, **dadurch gekennzeichnet, daß** das Abtasten des Detektionsraumes (25) mit mindestens einem Bilddetektor, insbesondere mindestens einer CCD-Farbkamera (16), aufgezeichnet wird.

4. Verfahren nach mindestens einem der vorangehenden Ansprüche, **dadurch gekennzeichnet, daß** ein mehrfarbiger Lichtstrahl (11), insbesondere ein mehrfarbiger Laserstrahl, eingesetzt wird, aus dessen Licht zeitlich nacheinander die parallelen, räumlich hintereinander angeordneten Lichtebenen (19, 18, 17, 20, 21, 22) mit Licht unterschiedlicher Farbe erzeugt werden.

5. Verfahren nach mindestens einem der vorangehenden Ansprüche, **dadurch gekennzeichnet, daß** mindestens zwei Lichtquellen (10) eingesetzt werden, aus deren Licht zeitlich nacheinander die parallelen, räumlich hintereinander angeordneten Lichtebenen (19, 18, 17, 20, 21, 22) mit Licht unterschiedlicher Frequenz oder unterschiedlichem Frequenzspektrum erzeugt werden.

6. Verfahren nach mindestens einem der vorangehenden Ansprüche, **dadurch gekennzeichnet, daß** der mehrfarbige Lichtstrahl (11) im Puls- oder Dauerstrichbetrieb eingesetzt wird, oder daß die Lichtquelle (10) im Puls- oder Dauerstrichbetrieb betrieben wird.

7. Verfahren nach mindestens einem der vorangehenden Ansprüche, **dadurch gekennzeichnet, daß** die zeitlich nacheinander erzeugten und räumlich hintereinander angeordneten parallelen Lichtebenen (19, 18, 17, 20, 21, 22) den Detektionsraum (25) derart abtasten, daß der Bilddetektor (16) eine zeitlich zumindest näherungsweise kontinuierliche Ausleuchtung des Detektionsraumes (25) wahrnimmt.

8. Verfahren nach mindestens einem der vorangehenden Ansprüche, **dadurch gekennzeichnet, daß** der oder die Bilddetektoren (16) während des Abtastung des Detektionsraumes (25) in ihrer Tiefenschärfe kontinuierlich oder schrittweise derart nachgeregelt werden, daß die zeitlich nacheinander erzeugten und räumlich hintereinander angeordneten Lichtebenen (19, 18, 17, 20, 21, 22) am Ort der Bilddetektoren (16) jeweils zumindest annähernd scharf abgebildet werden.

9. Verfahren nach mindestens einem der vorangehenden Ansprüche, **dadurch gekennzeichnet, daß** mindestens zwei Abtastungen des Detektionsraumes (25) in kurzem Zeitabstand erfolgen.

10. Verfahren nach mindestens einem der vorangehenden Ansprüche, **dadurch gekennzeichnet, daß** mittels des Bilddetektors (16) ein zweidimensionales, farbiges Bild (40, 41, 42, 43) des Detektionsraumes (25) aufgenommen wird, wobei in dem einen Bild (42, 43) das von den Teilchen (30, 31, 32, 33, 34, 35) ausgehende oder gestreute Licht von mindestens zwei, insbesondere aufeinanderfolgenden Abtastungen des Detektionsraumes (25) erfaßt wird.

11. Verfahren nach mindestens einem der vorangehenden Ansprüche, **dadurch gekennzeichnet, daß** mittels des Bilddetektors (16) zweidimensionale farbige Bilder (40, 41, 42, 43) des Detektionsraumes (25) aufgenommen werden, wobei in mindestens zwei, insbesondere kurzzeitig nacheinander aufgenommenen Bildern (40, 41) das von den Teilchen (30, 31, 32, 33, 34, 35) ausgehende oder gestreute Licht von jeweils mindestens einer Abtastung des Detektionsraumes (25) erfaßt wird.

12. Verfahren nach mindestens einem der vorangehenden Ansprüche, **dadurch gekennzeichnet, daß** die Auswertung der Aufnahmen des Detektionsraumes (25) mit Hilfe von "Particle-Tracking"-Algorithmen oder Korrelationsverfahren unter Einbeziehung der Farbinformation oder der Frequenz- oder Frequenzbandinformation erfolgt.

13. Verfahren nach mindestens einem der vorangehenden Ansprüche, **dadurch gekennzeichnet, daß** aus dem detektierten Licht mittels einer Auswertung des oder der aufgenommenen, zweidimensionalen, farbigen Bilder (40, 41, 42, 43) des Detektionsraumes (25) der Ort der Teilchen (30, 31, 32, 34, 35) und/oder deren räumliche Verschiebung als Funktion der Zeit in dem abgetasteten Bereich des dreidimensionalen Detektionsraumes (25) bestimmt wird.

14. Verfahren nach Anspruch 13, **dadurch gekennzeichnet, daß** unter Berücksichtigung der Zeitdauer zwischen den Abtastvorgängen die lokalen Strömungsgeschwindigkeiten der einzelnen Teilchen (30, 31, 32, 33, 34, 35) bestimmt werden.

15. Vorrichtung zur Analyse von Strömungen, insbesondere zur dreidimensionalen Bestimmung von Strömungsgeschwindigkeitskomponenten oder der dreidimensionalen Sichtbarmachung von Strömungen in Flüssigkeiten oder Gasen, in einem Detektionsraum (25), wobei elektromagnetische Wellen, die zumindest teilweise von in dem Detektionsraum (25) enthaltenen, die Strömung charakterisierenden Teilchen (30, 31, 32, 33, 34, 35) ausgehen oder gestreut werden, detektiert werden, **dadurch gekennzeichnet, daß** mindestens eine Beleuchtungseinrichtung vorgesehen ist, mit der zeitlich nacheinander zumindest näherungsweise parallele, räumlich hintereinander angeordnete, den Detektionsraum zumindest bereichsweise mit elektromagnetischen Wellen unterschiedlicher Frequenz oder unterschiedlichem Frequenzspektrum beleuchtende Lichtebenen (19, 18, 17, 20, 21, 22) erzeugbar sind, und daß weiter mindestens eine Detektionseinrichtung vorgesehen ist, mit der frequenzselektiv oder frequenzbandselektiv zweidimensionale Bilder zumindest eines Bereiches des Detektionsraumes (25) aufnehmbar sind.

16. Vorrichtung nach Anspruch 15, **dadurch gekennzeichnet, daß** die Beleuchtungseinrichtung mindestens eine Lichtquelle (10), insbesondere einen Laser, aufweist, mit der oder denen elektromagnetische Wellen, insbesondere in Form von Licht, unterschiedlicher Frequenz oder mit unterschiedlichem Frequenzspektrum erzeugbar ist.

17. Vorrichtung nach Anspruch 16, **dadurch gekennzeichnet, daß** eine mehrfarbige Lichtquelle, insbesondere ein mehrfarbiger Laser vorgesehen ist, deren Licht mittels eines frequenzsensitiven Bauteils, insbesondere eines akustooptischen Modulators (12), eines Gitters oder eines Prismas, in mindestens drei, insbesondere eine Vielzahl von Farben zerlegbar ist.

18. Vorrichtung nach mindestens einem der Ansprüche 15 bis 17, **dadurch gekennzeichnet, daß** die Beleuchtungseinrichtung einen Kollimator (13), einen Polygon-Scanner (15) und einen Galvanometer-Scanner (14) aufweist.

19. Vorrichtung nach mindestens einem der Ansprüche 15 bis 18, **dadurch gekennzeichnet, daß** die Detektionseinrichtung an mindestens einer Seitenfläche des Detektionsraumes (25), insbesondere an einer zu den erzeugten Lichtebenen (17, 18, 19, 20, 21, 22) parallelen Stirnseite (26) des Detektionsraumes (25), angeordnet ist.

20. Vorrichtung nach mindestens einem der Ansprüche 15 bis 19, **dadurch gekennzeichnet, daß** die Detektionseinrichtung mindestens eine Farbkamera, insbesondere eine CCD-Farbkamera (16), aufweist, mit der zweidimensionale farbige Bilder des Detektionsraumes (25) aufnehmbar sind.

21. Vorrichtung nach Anspruch 20, **dadurch gekennzeichnet, daß** die Farbkamera mit einer Einrichtung zur Einstellung der Tiefenschärfe versehen ist.

22. Vorrichtung nach mindestens einem der Ansprüche 15 bis 21, **dadurch gekennzeichnet, daß** eine Auswerteeinheit zur Auswertung und/oder Speicherung der zweidimensionalen Bilder vorgesehen ist.

## Claims

1. Method for analysis of flows, in particular for three-dimensional determination of flow rate components or for three-dimensional visualization of flows in liquids or gases, in a detection area (25), with electromagnetic waves being detected which at least partially originate from or are scattered by particles (30, 31, 32, 33, 34, 35) which are contained in the detection area (25) and characterize the flow, **characterized in that** two at least approximately parallel light planes (19, 18, 17, 20, 21, 22), which are arranged physically one behind the other, are produced successively in time with electromagnetic waves at a different frequency or with a different frequency spectrum, by means of which the detection area (25) is scanned, at least in places.

2. Method according to Claim 1, **characterized in that** light planes (19, 18, 17, 20, 21, 22) are used with electromagnetic waves in the form of light, in particular of light in the visible frequency range and with a different colour.

3. Method according to Claim 1 or 2, **characterized in that** the scanning of the detection area (25) is recorded by means of at least one image detector, in particular by means of a CCD colour camera (16).

4. Method according to at least one of the preceding claims, **characterized in that** a multicolour light beam (11), in particular a multicolour laser beam, is used, from whose light the parallel light planes (19, 18, 17, 20, 21, 22) which are arranged physically one behind the other and have light of a different colour are produced successively in time.

5. Method according to at least one of the preceding claims, **characterized in that** at least two light sources (10) are used, from whose light the parallel light planes (19, 18, 17, 20, 21, 22), which are arranged physically one behind the other and have light at a different frequency or with a different frequency spectrum, are produced successively in time.

6. Method according to at least one of the preceding claims, **characterized in that** the multicolour light beam (11) is used in the pulsed or continuous-wave mode, or **in that** the light source (10) is operated in the pulsed mode or the continuous-wave mode.

7. Method according to at least one of the preceding claims, **characterized in that** the parallel light planes (19, 18, 17, 20, 21, 22) which are produced successively in time and are arranged physically one behind the other scan the detection area (25) in such a manner that the image detector (16) perceives the detection area (25) as being illuminated at least approximately continuously over time.

8. Method according to at least one of the preceding claims, **characterized in that** the depth of focus of the image detector or detectors (16) is readjusted continuously or in steps during the scanning of the detection area (25) in such a manner that the light planes (19, 18, 17, 20, 21, 22) which are produced successively in time and are arranged physically one behind the other are each imaged at least approximately in focus at the location of the image detectors (16).

9. Method according to at least one of the preceding claims, **characterized in that** at least two scans of the detection area (25) are carried out at a short time interval.

10. Method according to at least one of the preceding claims, **characterized in that** the image detector (16) records a two-dimensional coloured image (40, 41, 42, 43) of the detector area (25) with the light which is scattered by or originates from the particles (30, 31, 32, 33, 34, 35) being recorded in the one image (42, 43) by at least two, in particular successive, scans of the detection area (25).

11. Method according to at least one of the preceding claims, **characterized in that** the image detector (16) records two-dimensional colour images (40, 41, 42, 43) of the detection area (25), with light which is scattered by or originates from the particles (30, 31, 32, 33, 34, 35) being recorded in at least two images (40, 41) which in particular are recorded successively with a short time interval, by in each case at least one scan of the detection area (25).

12. Method according to at least one of the preceding claims, **characterized in that** the records of the detection area (25) are evaluated by means of particle tracking algorithms or correlation methods, including the colour information, or the frequency information or frequency-band information.

13. Method according to at least one of the preceding claims, **characterized in that** the location of the particles (30, 31, 32, 34, 35) and/or their spatial movement are/is determined as a function of time in the scanned area of the three-dimensional detection area (25), from the detected light, by evaluation of the recorded, two-dimensional colour image or images (40, 41, 42, 43) of the detection area (25).

14. Method according to Claim 13, **characterized in that** the local flow rates of the individual particles (30, 31, 32, 33, 34, 35) are determined taking into account the time period between the scanning processes.

15. Apparatus for analysis of flows, in particular for three-dimensional determination of flow rate components or for three-dimensional visualization of flows in liquids or gases, in a detection area (25), with electromagnetic waves being detected which at least partially originate from or are scattered by particles (30, 31, 32, 33, 34, 35) which are contained in the detection area (25) and characterize the flow, **characterized in that** at least one lighting device is provided, by means of which light planes (19, 18, 17, 20, 21, 22) can be produced successively in time, which are at least approximately parallel, are arranged physically one behind the other and illuminate the detection area at least in places with electromagnetic waves at a different frequency or with a different frequency spectrum, and **in that**, furthermore, at least one detection device is provided, by means of which two-dimensional images of at least an area of the detection area (25) can be recorded on a frequency-selective or frequency-band-selective basis.

16. Apparatus according to Claim 15, **characterized in that** the illumination device has at least one light source (10), in particular a laser, by means of which electromagnetic waves, in particular in the form of light, can be produced at a different frequency or with a different frequency spectrum.

17. Apparatus according to Claim 16, **characterized in that** a multicolour light source, in particular a multicolour laser, is provided, whose light can be broken down by means of a frequency-sensitive component, in particular an acousto-optical modulator (12), a grating or a prism, into at least three, and in particular a large number, of colours.

18. Apparatus according to at least one of Claims 15 to 17, **characterized in that** the illumination device has a collimator (13), a polygon scanner (15) and a galvanometer scanner (14).

19. Apparatus according to at least one of Claims 15 to 18, **characterized in that** the detection device is arranged on at least one side surface of the detection area (25) in particular on an end face (26) of the detection area (25) which is parallel to the light planes (17, 18, 19, 20, 21, 22) that are produced.

20. Apparatus according to at least one of Claims 15 to 19, **characterized in that** the detection device has at least one colour camera, in particular a CCD colour camera (16), by means of which two-dimensional colour images of the detection area (25) can be recorded.

21. Apparatus according to Claim 20, **characterized in that** the colour camera is provided with a device for adjustment of the depth of focus.

22. Apparatus according to at least one of Claims 15 to 21, **characterized in that** an evaluation unit is provided for evaluation and/or storage of the two-dimensional images.

## Revendications

1. Procédé d'analyse de flux notamment pour déterminer en trois dimensions des composantes de vitesse d'écoulement ou de la visualisation tridimensionnelle d'écoulement de liquide ou de gaz dans une chambre de détection (25) selon lequel on détecte les ondes électromagnétiques au moins en partie émises on dispersées par des particules (30, 31, 32, 33, 34, 35) caractérisant l'écoulement dans la chambre de détection (25),
**caractérisé en ce que**
successivement, on génère au moins deux plans lumineux (19, 18, 17, 20, 21, 22) au moins sensiblement parallèles, l'un derrière l'autre dans l'espace avec des ondes électromagnétiques de fréquence différente ou ayant un spectre de fréquences différent, pour détecter au moins par zones la chambre de détection (25).

2. Procédé selon la revendication 1,
**caractérisé en ce qu'**
on utilise des plans lumineux (19, 18, 17, 20, 21, 22) avec des ondes électromagnétiques sous la forme de lumière, notamment de lumière dans la plage des fréquences visibles avec des couleurs différentes.

3. Procédé selon l'une quelconque des revendications 1 ou 2,
**caractérisé en ce que**
la saisie faite dans la chambre de détection (25) est enregistrée à l'aide d'au moins un détecteur d'image, notamment d'au moins une caméra couleur CCD (16).

4. Procédé selon l'une des revendications précédentes,
**caractérisé en ce qu'**
on utilise un faisceau lumineux (11) à plusieurs couleurs notamment un faisceau laser à plusieurs couleurs dont la lumière génère successivement les plans lumineux (19, 18, 17, 20, 21, 22) parallèles qui se suivent dans l'espace avec de la lumière de couleur différente.

5. Procédé selon l'une des revendications précédentes
**caractérisé en ce qu'**
on utilise au moins deux sources lumineuses (10) dont la lumière génère des plans lumineux (19, 18, 17, 20, 21, 22) successifs, parallèles, qui se suivent dans l'espace, avec une lumière de fréquence différente ou un spectre de différentes fréquences.

6. Procédé selon l'une des revendications précédentes,
**caractérisé en ce qu'**
on utilise le faisceau lumineux à plusieurs couleurs (11) en mode permanent ou mode impulsionnel ou on fait fonctionner la source lumineuse (10) en mode permanent ou impulsionnel.

7. Procédé selon l'une des revendications précédentes,
**caractérisé en ce que**
les plans lumineux (19, 18, 17, 20, 21, 22) parallèles générés successivement et se suivant dans l'espace saisissent la chambre de détection (25) de façon que le détecteur d'image (16) reçoive un éclairage de la chambre de détection (25), au moins approximativement continu dans le temps.

8. Procédé selon l'une des revendications précédentes,
**caractérisé en ce que**
le ou les détecteurs d'image (16) sont asservis en continu ou pas à pas pour leur profondeur de champ au cours de la détection de la chambre de détection (25), les plans lumineux (19, 18, 17, 20, 21, 22) générés successivement et qui se suivent dans l'espace, forment au moins sensiblement des images nettes à l'endroit des détecteurs d'image (18).

9. Procédé selon l'une des revendications précédentes,
**caractérisé en ce qu'**
on effectue au moins deux saisies de la chambre de détection (25) à un intervalle court.

10. Procédé selon l'une des revendications précédentes,
**caractérisé en ce qu'**
à l'aide du détecteur d'image (16), on prend une image en couleur (40, 41, 42, 43) en deux dimensions de la chambre de détection (25), et dans au moins l'une des images (42, 43), on détecte la lumière émise ou dispersée par les particules (30, 31, 32, 33, 34, 35) d'au moins deux saisies notamment successives de la chambre de détection (25).

11. Procédé selon l'une des revendications précédentes,
**caractérisé en ce que**
le détecteur d'image (16) prend des images en couleur (41, 42, 43) à deux dimensions de la chambre de détection (25),
dans au moins deux images (40, 41) qui notamment se suivent de façon rapprochée, on saisit la lumière émise ou dispersée par les particules (30, 31, 32, 33,34, 35) par au moins une saisie de la chambre de détection (25).

12. Procédé selon l'une des revendications précédentes,
**caractérisé en ce que**
l'exploitation des prises de vue de la chambre de détection (25) se fait par des algorithmes de poursuite de particules ou des procédés de corrélation intégrant l'information de couleur ou l'information de fréquence ou de bande de fréquence.

13. Procédé selon l'une des revendications précédentes,
**caractérisé en ce qu'**
à partir de la lumière détectée, par l'exploitation de la ou des images couleur en deux dimensions (40, 41, 42, 43) de la chambre de détection (25), on détermine l'emplacement des particules (30, 31, 32, 34, 35) et/ou leur déplacement dans l'espace en fonction du temps dans la zone détectée de la chambre de détection (25) à trois dimensions.

14. Procédé selon la revendication 13,
**caractérisé en ce qu'**
en tenant compte de la durée entre les opérations de détection, on détermine les vitesses d'écoulement locales des différentes particules (30, 31, 32, 33, 34, 35).

15. Dispositif d'analyse de flux notamment pour déterminer en trois dimensions les composantes de vitesse de flux d'écoulement ou la visualisation en trois dimensions d'écoulement dans des liquides ou des gaz dans une chambre de détection (25) selon lequel on détecte les ondes électromagnétiques émises ou dispersées au moins en partie par les particules (30, 31, 32, 33, 34, 35) caractérisant l'écoulement et contenues dans la chambre de détection (25),
**caractérisé par**
au moins une installation d'éclairage qui génère successivement des plans lumineux éclairés par des ondes électromagnétiques de fréquence différente ou de spectre de différentes fréquences parallèles et se suivant dans l'espace, et
il est prévu en outre au moins une installation de détection qui permet d'enregistrer des images à deux dimensions, sélectives en fréquence ou en bande de fréquence d'au moins une zone de la chambre de détection (25).

16. Dispositif selon la revendication 15,
**caractérisé en ce que**
l'installation d'éclairage comporte au moins une source lumineuse (10), notamment un laser générant l'onde ou les ondes électromagnétiques notamment lumineuses de fréquence différente ou de spectre de fréquences différent.

17. Dispositif selon la revendication 16,
**caractérisé par**
une source lumineuse à plusieurs couleurs notamment un laser à plusieurs couleurs dont la lumière peut être décomposée par un composant sensible à la fréquence notamment un modulateur acoustique-optique (12), un réseau ou un prisme en au moins trois et notamment plusieurs couleurs.

18. Dispositif selon l'une quelconque des revendications 15 à 17,
**caractérisé en ce que**
l'installation d'éclairage comporte un collimateur (13), un scanner à polygone (15) et un scanner à galvanomètre (14).

19. Dispositif selon l'une des revendications 15 à 18,
**caractérisé en ce que**
l'installation de détection est prévue sur au moins une surface latérale de la chambre de détection (25) notamment sur une face frontale (26) de la chambre de détection (25), parallèle aux plans lumineux générés (17, 18, 19, 20, 21, 22).

20. Dispositif selon l'une des revendications 15 à 19,
**caractérisé en ce que**
l'installation de détection comporte au moins une caméra couleur notamment une caméra couleur CCD (16) qui prend des images en couleur à deux dimensions de la chambre de détection (25).

21. Dispositif selon la revendication 20,
**caractérisé en ce que**
la caméra couleur est équipée d'une installation pour régler la profondeur de champ.

22. Dispositif selon l'une des revendications 15 à 21,
**caractérisé par**
une installation d'exploitation pour enregistrer et/ou exploiter les images à deux dimensions.
